# FASCICULE DE BREVET EUROPEEN

(11) **EP 3 068 696 B1**
(45) Date de publication et mention de la délivrance du brevet: **02.08.2017**
(21) Numéro de dépôt: 14825374.3
(22) Date de dépôt: 23.10.2014
(51) Int. Cl.: B65D 1/02

(54) **RÉCIPIENT EN MATIÈRE THERMOPLASTIQUE À FOND DE TYPE PÉTALOÏDE À SOUFFLABILITÉ AUGMENTÉE**
BEHÄLTER AUS THERMOPLASTISCHEM MATERIAL MIT BLÜTENBLATTFÖRMIGEM BODEN MIT ERHÖHTER BLASFÄHIGKEIT
CONTAINER MADE FROM THERMOPLASTIC MATERIAL HAVING A PETALOID BOTTOM WITH INCREASED BLOWABILITY

(30) Priorité: 15.11.2013 FR 1361210
(43) Date de publication de la demande: 21.09.2016
(73) Titulaire: Sidel Participations, 76930 Octeville-sur-Mer (FR)
(72) Inventeur: PIERRE, Ivan, F-76930 Octeville-sur-Mer (FR)
(74) Mandataire: Siloret, Patrick
(86) Numéro de dépôt international: PCT/FR2014/052701
(87) Numéro de publication internationale: WO 2015/071565

(56) Documents cités:
- EP-A1- 2 764 979
- WO-A1-2011/131893
- WO-A2-2009/092930

## Description

L'invention a trait au domaine des récipients en matière plastique, selon le préambule de la revendication 1, telle que les bouteilles, obtenues par un procédé d'injection d'une préforme, puis soufflage ou étirage-soufflage de la préforme chauffée. Plus précisément, l'invention est relative à un tel récipient destiné à contenir un produit gazeux, tel qu'un liquide carbonaté, et dont le fond est configuré à cet effet. Un tel récipient est, par exemple, décrit par le document WO2011/131893. Un récipient comprend de manière classique un corps, s'étendant selon un axe principal, muni à une extrémité supérieure d'un goulot, généralement appelé col, raccordé au corps par une épaule, et fermé à l'extrémité inférieure par un fond. Le fond d'un récipient destiné à contenir un liquide gazeux est appelé en général fond pétaloïde, car il présente une succession de pieds en saillie vers l'extérieur du récipient, en forme de pétales, alternés avec des vallées, séparant les pieds. Cette configuration du fond a pour but notamment de le rigidifier pour le rendre plus résistant qu'un fond plat vis-à-vis notamment de la pression de gaz dissout dans le liquide, et qui exerce des contraintes mécaniques sur le fond. Les points des pieds en contact avec la surface sur laquelle repose le récipient forment ainsi une assise pour le récipient, tandis que les vallées absorbent les contraintes.

Les différentes surfaces formant le corps et le fond du récipient sont obtenues par rotation de courbes génératrices autour de l'axe principal, afin de conserver une forme générale cylindrique autour de l'axe principal.

La forme pétaloïde permet certainement de rigidifier le fond. Cependant, elle implique des difficultés lors du procédé de fabrication par soufflage ou étirage-soufflage.

Le procédé de fabrication consiste notamment à placer une préforme chauffée dans un moule, dont les parois peuvent être chauffées également, puis à y injecter de l'air sous pression (soufflage), et éventuellement à étirer la matière jusqu'au fond du moule grâce à une tige (étirage) simultanément au soufflage. La préforme se gonfle et s'étire sous l'effet de l'air et éventuellement de la tige, et la matière se retrouve plaquée contre les parois du moule puis se fige pour former le récipient. La soufflabilité désigne la capacité d'un récipient à être formé par soufflage : plus la soufflabilité est élevée, plus le récipient est facile à souffler, c'est-à-dire qu'il requiert une pression de soufflage et un temps de passage dans le moule moins importants.

Or, la matière entre en premier en contact avec l'empreinte des vallées, ménagées sur le fond de moule, où elle tend à se figer de sorte que la soufflabilité du fond se trouve diminuée à partir de ce contact. L'expansion ultérieure de la matière pour atteindre les pieds est impactée et l'épaisseur au niveau des pieds est souvent inférieure à l'épaisseur au niveau des vallées. La rigidité du fond s'en trouve diminuée de manière non souhaitable.

Pour pallier cet inconvénient, il est connu soit d'augmenter la pression de soufflage, ce qui est coûteux en énergie, soit d'augmenter le temps de soufflage pour laisser plus de temps à la matière pour s'écouler jusqu'aux pieds, ce qui diminue les cadences de production.

Le document WO 2009/092930, au nom de la demanderesse, expose plus en détail ce problème, et propose une solution liée à la forme des vallées, facilitant l'écoulement de la matière vers les pieds.

Une autre solution consiste à diminuer le diamètre de pose du récipient, c'est-à-dire le diamètre de l'assise. En effet, avec une pression de soufflage moindre ou un temps de soufflage plus faible, la matière de la préforme est alors plus facilement déformée par le soufflage, ce qui lui permet d'atteindre plus facilement la partie du moule correspondant aux pieds.

Cependant, cette solution est limitée. En effet, la stabilité du récipient reposant sur les pieds est directement liée au diamètre de pose : plus ce diamètre est important, meilleure est la stabilité. Le diamètre de pose ne peut donc être réduit qu'en faisant un compromis entre stabilité et soufflabilité.

Il existe donc un besoin pour un nouveau récipient présentant un fond apportant une solution aux inconvénients précités, permettant d'augmenter la soufflabilité, tout en garantissant une stabilité satisfaisante.

Un premier objet de l'invention est de proposer un récipient en matière thermoplastique dont la soufflabilité est améliorée.

Un deuxième objet de l'invention est de proposer un récipient en matière thermoplastique dont la stabilité est conservée.

Un troisième objet de l'invention est de proposer un récipient en matière thermoplastique présentant un fond rigide, particulièrement adapté pour que le récipient contienne un liquide gazeux.

Ainsi, l'invention propose un récipient en matière thermoplastique obtenu par soufflage, ou étirage-soufflage, d'une préforme préalablement injectée, le récipient comprenant un corps s'étendant selon un axe principal et comprenant un fond de type pétaloïde qui présente une zone centrale à partir de laquelle des pieds en alternance avec des vallées s'étendent radialement, chaque pied comprenant une portion périphérique raccordée au corps du récipient et une portion centrale raccordée à la zone centrale, le récipient étant caractérisé en ce que chaque pied présente en outre une portion tronquée, formant assise pour le récipient et s'étendant entre la portion périphérique et la portion centrale, la portion tronquée comprenant une surface de raccord à la portion périphérique, une surface de raccord à la portion centrale, et une surface intermédiaire reliant les deux surfaces de raccord, la surface intermédiaire étant définie par la rotation d'au moins une courbe génératrice autour d'un axe de troncature différent de l'axe principal et spécifique à chaque pied, le rayon de courbure de la courbe de la surface intermédiaire étant supérieur au rayon de courbure des courbes génératrices des surfaces de raccord.

Selon d'autres caractéristiques prises seules ou en combinaison :
- l'axe de troncature est incliné par rapport à l'axe principal ;
- l'axe de troncature est incliné d'un angle d'inclinaison par rapport à l'axe principal compris entre 0° et 65° ;
- l'angle d'inclinaison est de 40° ;
- le rayon de courbure de la courbe génératrice de la surface intermédiaire n'est pas constant ;
- le rayon de courbure de la courbe génératrice de la surface intermédiaire est au moins de 10 mm ;
- le rayon de courbure de la courbe générative de la surface intermédiaire est de 28 mm;
- le rayon de courbure de la courbe génératrice de la surface intermédiaire est infini, la courbe génératrice de la surface étant considérée comme une droite ;
- le rapport entre le rayon de courbure de la courbe génératrice de la surface intermédiaire et le rayon de courbure de chaque courbe génératrice des surfaces de raccord est d'au moins huit.

D'autre caractéristiques et avantages apparaîtront à la lumière de la description de modes de réalisation particuliers de l'invention, accompagnée des figures sur lesquelles :
La figure 1 est une représentation schématique du profil de coupe d'un récipient, selon un plan comprenant un axe X principal, le récipient étant muni d'un fond selon l'invention ;

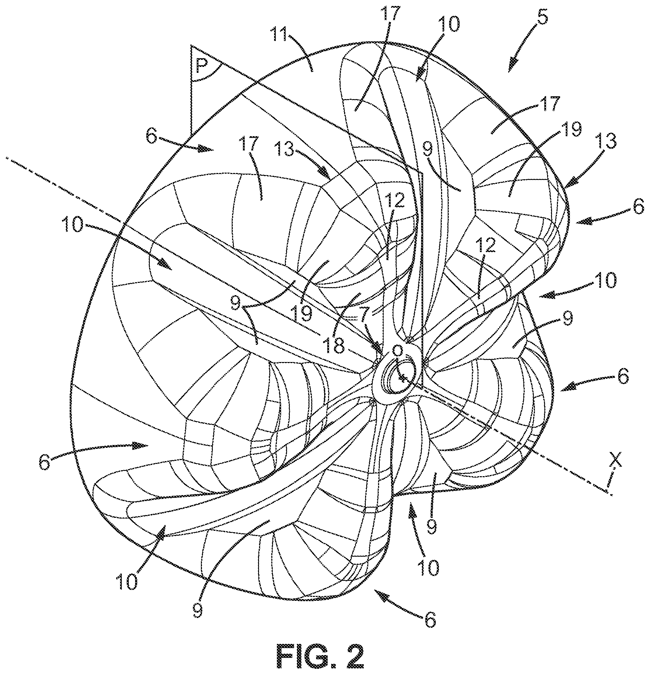

La figure 2 est vue tridimensionnelle de trois quarts du fond du récipient de la figure 1 ;
La figure 3 est une vue de dessous du fond de récipient de la figure 2 ;
La figure 4 est une vue en coupe partielle du fond selon l'axe IV-IV de la figure 3;
La figure 5 est une vue en coupe du fond selon un plan perpendiculaire à l'axe du récipient ;
La figure 6 est une vue de côté du fond de la figure 2 ;
La figure 7 est une représentation schématique superposant un pied du fond selon l'invention et un pied selon l'état de la technique vus en coupe radiale ;
La figure 8 est une vue en coupe, selon l'axe VII-VII du fond de la figure 3, d'un pied du fond selon l'invention superposé à une vue similaire d'un pied de l'état de la technique ;
La figure 9 est une vue en coupe, selon l'axe IX-IX du fond de la figure 3, d'un pied du fond selon l'invention superposé à une vue similaire d'un pied de l'état de la technique ;
La figure 10 est une vue en coupe, selon l'axe X-X du fond de la figure 3, d'un pied du fond selon l'invention superposé à une vue similaire d'un pied de l'état de la technique.

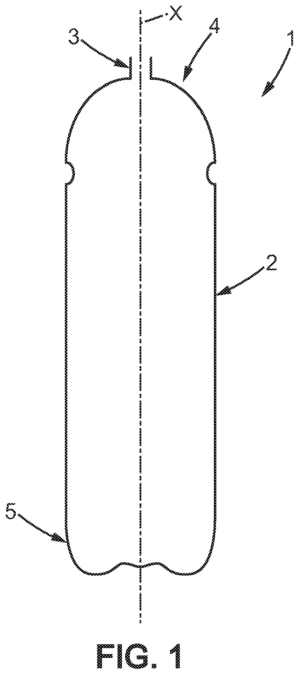

Sur la figure 1, il est représenté un récipient 1, de type bouteille, destiné en particulier à contenir un liquide gazeux. Le récipient est réalisé en matériau thermoplastique, tel que le PET, par soufflage, ou étirage-soufflage. Le récipient 1 comprend un corps 2, creux, s'étendant selon un axe X principal, dont la paroi est obtenue par révolution d'une ou de plusieurs courbes génératrices autour de l'axe X principal. Un col 3 (ou goulot) est placé à une extrémité supérieure du corps 2 et relié au corps 2 par une épaule 4. Le corps 2 est fermé à son extrémité inférieure par un fond 5.

Le fond 5 est de type pétaloïde. Il comprend des pieds 6 en saillie selon l'axe X principal, qui s'étendent radialement à partir d'une zone 7 centrale du fond 5, laquelle comprend un pion 8 en saillie. Le centre du fond 5 est marqué O, l'axe X principal passant par le centre O. Chaque pied 6 est défini entre deux flancs 9 latéraux qui le bordent, et qui sont inclinés par rapport à un plan P radial du pied 6 d'un angle allant par exemple de 10° à 30°, pour faciliter le soufflage.

Les pieds 6 sont disposés en alternance avec des vallées 10, formant des creux entre deux flancs 9 qui se font face, les vallées 10 s'étendant également radialement à partir de la zone 7 centrale. Le nombre de vallées 10 est égal au nombre de pieds 6. Le nombre de pieds 6 et de vallées 10 est au moins égal à trois, et en pratique, ainsi que selon le mode de réalisation présenté sur les figures, est égal à cinq.

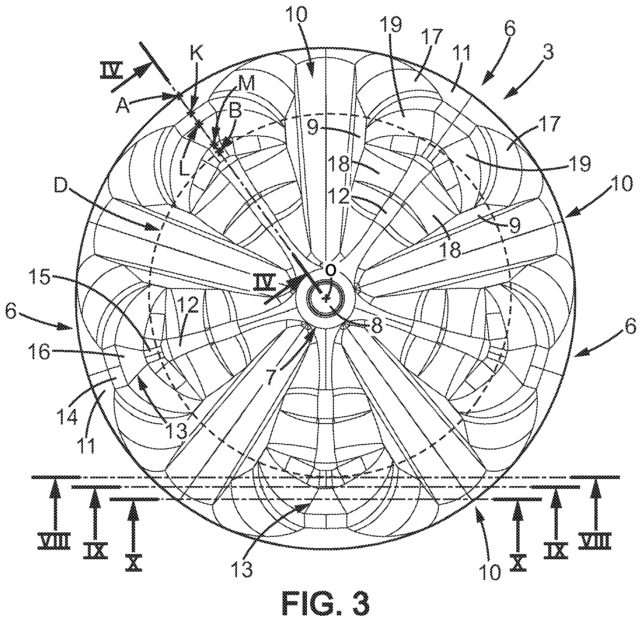

Chaque pied 6 est défini, lorsque vu en coupe radiale, le long d'une direction parallèle à l'axe X principal, entre deux points A et B. Le premier point A est placé à la jonction entre le fond 5 et le corps 2, le deuxième point B, dit d'assise, étant le point le plus en saillie du fond 5, c'est-à-dire le point sur lequel le récipient 1 repose lorsqu'il est posé sur son fond 5. De préférence, l'ensemble des points B sont répartis selon un cercle D d'assise, représenté sur la figure 3, dont le centre coïncide avec le centre O du fond 5. Le cercle D, et plus exactement son rayon, influe sur la stabilité du récipient 1. En effet, plus le rayon du cercle D d'assise est grand, meilleure est la stabilité du récipient 1.

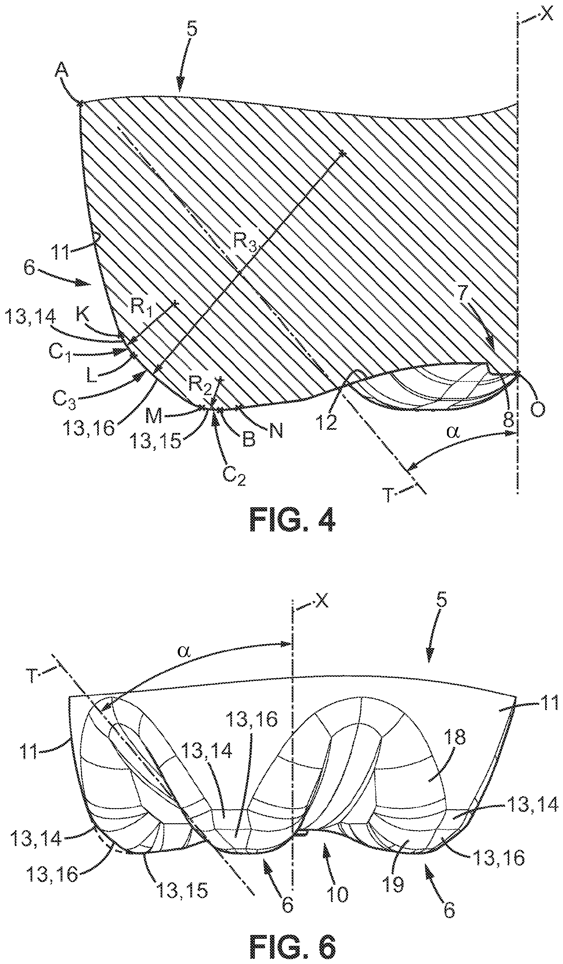

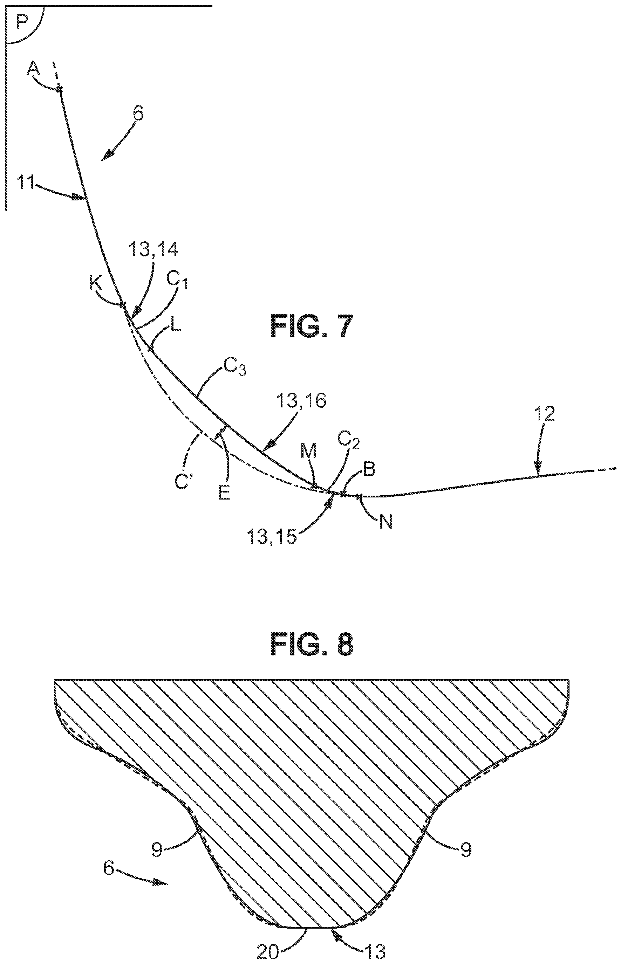

Lorsque vu en coupe radiale comme sur la figure 4 ou la figure 7, la paroi de chaque pied 6 comprend une portion 11 périphérique raccordée au corps 2 au point A et une portion 12 centrale raccordée à la zone 7 centrale. La portion 11 périphérique est par exemple obtenue par un balayage autour de l'axe X principal d'une courbe génératrice, et forme une portion légèrement inclinée, ou courbée, par rapport à l'axe X longitudinal, vers le centre O lorsqu'on s'éloigne du corps 2. La portion 12 centrale est légèrement convexe, c'est-à-dire rentrée vers l'intérieur du récipient vers le centre O, et rejoint la zone 7 centrale.

La paroi de chaque pied 6 comprend alors une portion 13 dite tronquée, s'étendant entre la portion 11 périphérique et la portion 12 centrale, et passant par le point B d'assise. La portion 13 tronquée comprend une surface 14 de raccord à la portion 11 périphérique, une surface 15 de raccord à la portion 12 centrale, et une surface 16 intermédiaire reliant les deux surfaces 14, 15 de raccord. Chaque surface respectivement 14, 15, 16 de la portion 13 tronquée peut être définie par la rotation d'au moins une courbe respectivement C1, C2 et C3 autour d'un axe.

Chaque surface, respectivement 14, 15, 16, de la portion 13 tronquée est formée à partir d'au moins une courbe dite génératrice, respectivement C1, C2 et C3, de rayon de courbure, respectivement R1, R2 et R3. Plus précisément, lorsque vue en coupe radiale, la courbe C1 de la surface 14 de raccord à la portion 11 périphérique s'étend entre un point K et un point L, la courbe C3 de la surface 16 intermédiaire s'étend du point L à un point M et la courbe C2 de la surface 15 de raccord à la portion 12 centrale s'étend du point M jusqu'à un point N en passant par le point B d'assise. Le point N peut être confondu avec le point B. Le rayon R1, R2, R3 de chaque courbe C1, C2, C3 est alors le rayon mesuré dans le plan de coupe radiale.

La surface 16 intermédiaire est définie par la rotation d'au moins une courbe C3 génératrice, autour d'un axe T de troncature, qui est différent de l'axe X principal. L'axe T de troncature est de préférence compris dans le plan P radial du pied 6 concerné. Le rayon R3 de courbure de la courbe C3 est supérieur aux rayons R1 et R2 de courbure des courbes C1 et C2 génératrices des surfaces 14, 15 de raccord. L'axe T de troncature est spécifique à chaque pied 6 du fond 5. Ainsi, pour chaque pied 6, il est défini un axe T de troncature.

Ainsi, par exemple, l'axe T de troncature est un axe parallèle à l'axe X principal, mais écarté de l'axe X principal dans le plan P radial du pied 6 correspondant. En variante, l'axe T de troncature est incliné par rapport à l'axe X principal.

On a représenté deux cercles sur la figure 5, qui est une vue en coupe dans un plan perpendiculaire à l'axe X principal, au niveau des surfaces 16 intermédiaires des pieds. Le cercle en trait discontinu a son centre confondu avec le centre O du fond 5, sur l'axe X principal, et passe par le point le plus éloigné radialement du centre O de chaque pied 6. Le cercle en trait plein représente le cercle coradial à, c'est-à-dire de même centre et de même diamètre que, la surface 16 intermédiaire dans ce plan pour un pied 6, de centre O' différent du centre O du fond 5. Le cercle coradial à la surface 16 intermédiaire a donc son centre O' sur l'axe T de troncature.

Les courbes C1, C2, C3 peuvent être de rayon R1, R2, R3 de courbure constant ou non. Dans ce dernier cas, le rayon R3 de courbure le plus petit mesuré sur la courbe C3 de la surface 16 intermédiaire est toujours supérieur au rayon R1 de courbure le plus grand mesuré sur la courbe C1 et au rayon R2 de courbure le plus grand mesuré sur la courbe C2.

Les surfaces 14 et 15 de raccord permettent d'assurer la continuité entre les portions 11, 12 et 13 du pied 6. Elles sont alors obtenues par exemple par balayage de leur courbe C1, C2 génératrice autour d'un axe, qui peut être différent de l'axe T de troncature, et qui est par exemple l'axe X principal. Selon un mode de réalisation particulier, les rayons R1 et R2 de courbure des courbes C1 et C2 génératrices sont constants, de sorte que les surfaces 14, 15 de raccord sont assimilables à des congés entre les portions 11, 12 et la surface 16 intermédiaire.

Selon un mode de réalisation, le rayon R3 de courbure de la courbe C3 génératrice de la surface 16 intermédiaire est au moins de 10 mm. Par exemple, il est de 28 mm. L'axe T de troncature est incliné d'un angle α d'inclinaison par rapport à l'axe X principal de préférence compris entre 0° et 65°, et par exemple de 40°. Selon un mode de réalisation particulier, le rayon R3 de courbure de la courbe C3 de la surface 16 intermédiaire est infini, ou quasiment : la courbe C3 est alors assimilable à une droite.

Le rayon R3 de courbure de la courbe C3 est très supérieur, de préférence dans un rapport d'au moins huit, au rayon de courbure des courbes C1 et C2.

La portion 13 tronquée ainsi formée, et en particulier la surface 16 intermédiaire, permet de réduire la dimension radiale du pied en tronquant une partie du pied, à la périphérie, tout en ne sacrifiant pas la stabilité du récipient 1.

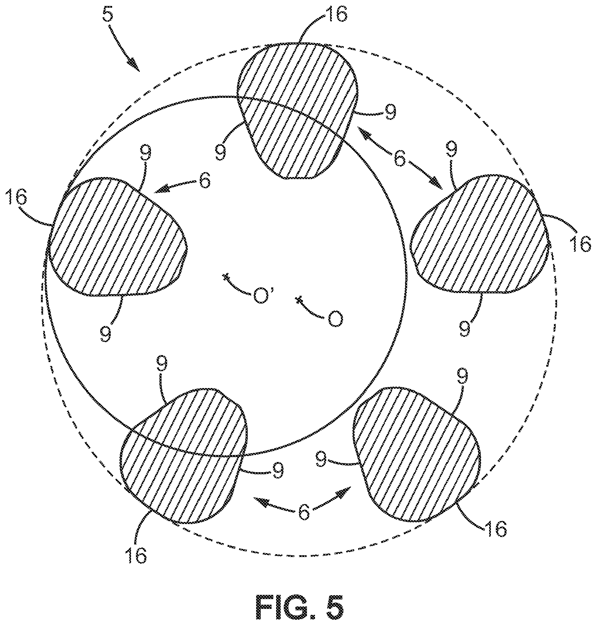

Sur la figure 6, il est représenté un fond 5 conforme à l'invention, dont un pied 6 est superposé avec un pied de l'état de la technique, représenté en traits discontinus, ce dernier étant obtenu, de manière classique, par rotation d'une ou de plusieurs courbes génératrices autour de l'axe X principal. La portion 13 tronquée permet d'obtenir une extension radiale diminuée par rapport au pied de l'état de la technique, tout en conservant le même diamètre du cercle D d'assise. Plus précisément, et comme représenté sur la figure 7, le pied de l'état de la technique part du même point A de jonction avec le corps 2 et forme une assise de même rayon, c'est-à-dire qu'il passe par le même point B, que le pied 6 du fond 5 selon l'invention. Jusqu'au point K, c'est-à-dire sur la portion 11 périphérique, le profil des deux pieds est sensiblement confondu. Puis, leur profil se sépare jusqu'au point B, où ils sont de nouveau confondus sur la portion 12 centrale. L'écart E mesuré entre le profil des deux pieds peut être de plusieurs millimètres, et présente un avantage certain quant à la soufflabilité du pied 6 conforme à l'invention. En effet, lors du soufflage, la matière doit être moins étirée dans la direction radiale pour atteindre la portion 13 tronquée que pour un pied de l'état de la technique.

En outre, les portions 11 et 12 de raccord ainsi que la portion 13 tronquée sont reliées aux flancs 9 latéraux par des bords, respectivement 17, 18, 19 latéraux arrondis, assurant la continuité entre les portions 11, 12 et 13 d'une part et les flancs 9 latéraux d'autre part. Grâce à la construction de chaque pied 6 par les axes T de troncature, le bord 19 latéral reliant la portion 13 tronquée à un flanc 9 permet au profil du pied 6 conforme à l'invention de se rapprocher sensiblement de celui du pied de l'état de la technique au niveau de l'assise (figure 8). Les avantages liés à la stabilité du fond sont ainsi conservés.

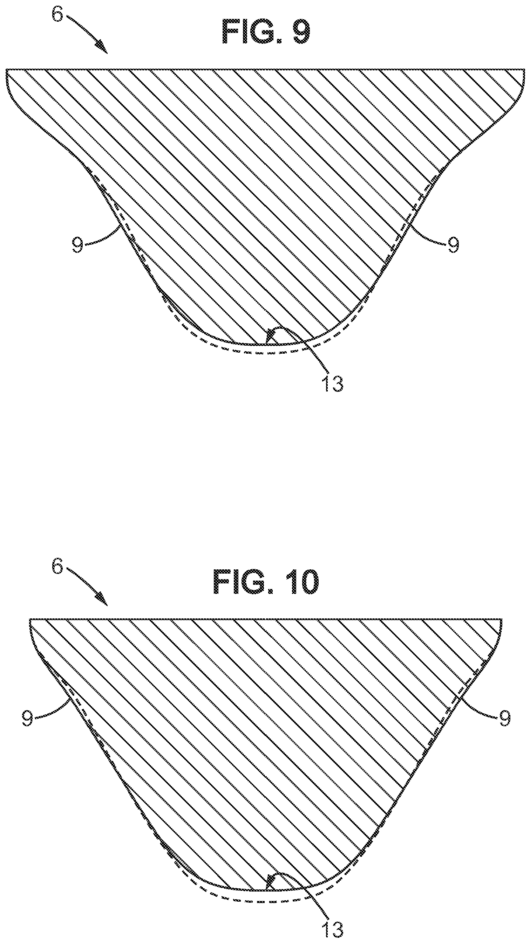

En effet, la ligne 20 de contact entre le pied 6 et la surface de pose, correspondant à une portion du cercle D d'assise, est confondue avec la ligne de contact du pied de l'état de la technique. Cependant, la portion 13 tronquée permet au pied 6 de s'écarter de la surface d'assise, c'est-à-dire la surface comprenant le cercle D d'assise, plus rapidement lorsqu'il s'éloigne du centre O du fond 5 que le pied de l'état de la technique. Les figures 8 à 10 illustrent ce résultat. Sur la figure 8, qui est une vue coupe au niveau du point B d'un pied, le profil du pied 6 selon l'invention, représenté en trait plein, est sensiblement confondu avec celui du pied de l'état de la technique, représenté en trait discontinu. Sur la figure 9, la coupe est plus éloignée du centre O du fond 5 que sur la figure 8. Le pied 6 selon l'invention est écarté du pied de l'état de la technique, et plus précisément le profil du pied 6 selon l'invention est moins développé que le pied de l'état de la technique. Sur la figure 10, qui est une coupe davantage éloignée du centre O du fond 5 que sur la figure 9, l'écart entre les deux pieds est encore plus important. Ainsi, la matière doit là encore être moins étirée.

Ainsi, lors du soufflage, la matière doit être moins étirée selon les deux directions perpendiculaires à l'axe X principal. En d'autres termes, le pied 6 du fond 5 selon l'invention est plus proche de la préforme initiale à partir de laquelle le récipient est soufflé que le pied de l'état de la technique. La soufflabilité du fond 5 est donc augmentée, puisque le temps et / ou la pression de soufflage pour former le fond 5 peuvent être diminués.

En outre, l'inclinaison des flancs 9 par rapport au plan P radial est sensiblement inchangée, de sorte que la rigidité du fond n'est pas, ou peu, impactée par la présence de portion 13 tronquée.

En conclusion, le nouveau pied 6 permet de répondre à la fois aux contraintes liées à la soufflabilité du pied et aux contraintes liées à la stabilité. En particulier, la portion 13 de troncature n'influence pas le rayon du cercle D d'assise mais tronque de manière substantielle le pied 6. Le nouveau pied 6 conserve toutefois l'inclinaison des flancs 9 latéraux, pour notamment ne pas diminuer la rigidité.

## Revendications

1. Récipient (**1**) en matière thermoplastique obtenu par soufflage, ou étirage-soufflage, d'une préforme préalablement injectée, le récipient (**1**) comprenant un corps (**2**) s'étendant selon un axe (**X**) principal et comprenant un fond (**5**) de type pétaloïde qui présente une zone (**7**) centrale à partir de laquelle des pieds (**6**) en alternance avec des vallées (**10**) s'étendent radialement, chaque pied (**6**) comprenant une portion (**11**) périphérique raccordée au corps (**2**) du récipient et une portion (**12**) centrale raccordée à la zone (**7**) centrale, le récipient étant **caractérisé en ce que** chaque pied présente en outre une portion (**13**) tronquée, formant assise pour le récipient (**1**) et s'étendant entre la portion (**11**) périphérique et la portion (**12**) centrale, la portion (**13**) tronquée comprenant une surface (**14**) de raccord à la portion périphérique, une surface (**15**) de raccord à la portion centrale, et une surface (**16**) intermédiaire reliant les deux surfaces (**14**, **15**) de raccord, la surface (**16**) intermédiaire étant définie par la rotation d'au moins une courbe (**C3**) génératrice autour d'un axe (**T**) de troncature différent de l'axe (**X**) principal et spécifique à chaque pied, le rayon (**R3**) de courbure de la courbe (**C3**) de la surface (**16**) intermédiaire étant supérieur au rayon (**R1**, **R2**) de courbure des courbes (**C1**, **C2**) génératrices des surfaces (**14**,**15**) de raccord.

2. Récipient (**1**) selon la revendication 1, dans lequel l'axe (**T**) de troncature est incliné par rapport à l'axe (**X**) principal.

3. Récipient (**1**) selon la revendication 2, dans lequel l'axe (**T**) de troncature est incliné d'un angle (α) d'inclinaison par rapport à l'axe (**X**) principal compris entre 0° et 65°.

4. Récipient (**1**) selon la revendication 3, dans lequel l'angle (α) d'inclinaison est de 40°.

5. Récipient (**1**) selon l'une quelconque des revendications précédentes, dans lequel le rayon (**R3**) de courbure de la courbe (**C3**) génératrice de la surface (**16**) intermédiaire n'est pas constant.

6. Récipient (**1**) selon l'une quelconque des revendications précédentes, dans lequel le rayon (**R3**) de courbure de la courbe (**C3**) génératrice de la surface (**16**) intermédiaire est au moins de 10 mm.

7. Récipient (**1**) selon l'une des revendications 1 à 4, dans lequel le rayon (**R3**) de courbure de la courbe (**C3**) générative de la surface intermédiaire (**16**) est de 28 mm.

8. Récipient selon l'une des revendications 1 à 6, dans lequel le rayon (**R3**) de courbure de la courbe (**C3**) génératrice de la surface (**16**) intermédiaire est infini, la courbe (**C3**) génératrice de la surface (**16**) étant considérée comme une droite.

9. Récipient (**1**) selon l'une quelconque des revendications précédentes, dans lequel le rapport entre le rayon (**R3**) de courbure de la courbe (**C3**) génératrice de la surface (**16**) intermédiaire et le rayon (**R1**, **R2**) de courbure de chaque courbe (**C1**, **C2**) génératrice des surfaces (**14**, **15**) de raccord est d'au moins huit.

## Patentansprüche

1. Behälter (1) aus thermoplastischem Material, erhalten durch Blasformen oder Streckblasformen, aus einem Vorformling, der zuvor gespritzt wurde, wobei der Behälter (1) einen Körper (2) umfasst, der sich entsprechend einer Hauptachse (X) erstreckt und einen blütenblattförmigen Boden (5) umfasst, der einen Mittelbereich (7) aufweist, von welchem ausgehend sich Füße (6) abwechselnd mit Tälern (10) radial erstrecken, wobei jeder Fuß (6) einen Randabschnitt (11), der mit dem Körper (2) des Behälters verbunden ist, und einen Mittelabschnitt (12), der mit dem Mittelbereich (7) verbunden ist, umfasst, wobei der Behälter **dadurch gekennzeichnet ist, dass** jeder Fuß ferner einen abgeschnittenen Abschnitt (13) aufweist, der eine Grundfläche für den Behälter (1) bildet und sich zwischen dem Randabschnitt (11) und dem Mittelabschnitt (12) erstreckt,
wobei der abgeschnittene Abschnitt (13) eine Verbindungsfläche (14) zum Randabschnitt, eine Verbindungsfläche (15) zum Mittelabschnitt und eine Zwischenfläche (16) umfasst, die die zwei Verbindungsflächen (14, 15) verbindet, wobei die Zwischenfläche (16) durch die Drehung zumindest einer generativen Kurve (C3) um eine Abschnittsachse (T) definiert ist, die sich von der Hauptachse (X) unterscheidet und für jeden Fuß individuell ist, wobei der Krümmungsradius (R3) der Kurve (C3) der Zwischenfläche (16) größer als der Krümmungsradius (R1, R2) der generativen Kurven (C1, C2) der Verbindungsflächen (14, 15) ist.

2. Behälter (1) nach Anspruch 1, wobei die Abschnittsachse (T) gegenüber der Hauptachse (X) geneigt ist.

3. Behälter (1) nach Anspruch 2, wobei die Abschnittsachse (T) in einem Neigungswinkel (α) gegenüber der Hauptachse (X) geneigt ist, der zwischen 0° und 65° beträgt.

4. Behälter (1) nach Anspruch 3, wobei der Neigungswinkel (α) 40° beträgt.

5. Behälter (1) nach einem der vorhergehenden Ansprüche, wobei der Krümmungsradius (R3) der generativen Kurve (C3) der Zwischenfläche (16) nicht konstant ist.

6. Behälter (1) nach einem der vorhergehenden Ansprüche, wobei der Krümmungsradius (R3) der generativen Kurve (C3) der Zwischenfläche (16) zumindest 10 mm beträgt.

7. Behälter (1) nach einem der Ansprüche 1 bis 4, wobei der Krümmungsradius (R3) der generativen Kurve (C3) der Zwischenfläche (16) 28 mm beträgt.

8. Behälter nach einem der Ansprüche 1 bis 6, wobei der Krümmungsradius (R3) der generativen Kurve (C3) der Zwischenfläche (16) unendlich ist, wobei die generative Kurve (C3) der Fläche (16) als eine Gerade betrachtet wird.

9. Behälter (1) nach einem der vorhergehenden Ansprüche, wobei das Verhältnis zwischen dem Krümmungsradius (R3) der generativen Kurve (C3) der Zwischenfläche (16) und dem Krümmungsradius (R1, R2) jeder generativen Kurve (C1, C2) der Verbindungsflächen (14, 15) zumindest acht beträgt.

## Claims

1. Container (**1**) made of thermoplastic material obtained by blow-moulding, or drawing blow-moulding, of a previously injected preform, the container (**1**) comprising a body (**2**) extending along a main axis (**X**) and comprising a bottom (**5**) of petaloid type which has a central zone (**7**) from which feet (**6**) alternating with valleys (**10**) extend radially, each foot (**6**) comprising a peripheral portion (**11**) connected to the body (**2**) of the container and a central portion (**12**) connected to the central zone (**7**), the container being **characterized in that** each foot also has a truncated portion (**13**), forming a seat for the container (**1**) and extending between the peripheral portion (**11**) and the central portion (**12**),
the truncated portion (**13**) comprising a surface (**14**) connecting to the peripheral portion, a surface (**15**) connecting to the central portion, and an intermediate surface (**16**) linking the two connecting surfaces (**14**, **15**), the intermediate surface (**16**) being defined by the rotation of at least one generating curve (**C3**) about a truncation axis (**T**) different from the main axis **(X)** and specific to each foot, the radius (**R3**) of curvature of the curve (**C3**) of the intermediate surface (**16**) being greater than the radius (**R1, R2**) of curvature of the generating curves (**C1, C2**) of the connecting surfaces (**14**, **15**).

2. Container (**1**) according to Claim 1, in which the truncation axis (**T)** is inclined relative to the main axis **(X).**

3. Container (**1**) according to Claim 2, in which the truncation axis (**T**) is inclined by an angle (**α**) of inclination relative to the main axis (**X**) of between 0° and 65°.

4. Container (**1**) according to Claim 3, in which the angle (**α**) of inclination is 40°.

5. Container (**1**) according to any one of the preceding claims, in which the radius (**R3**) of curvature of the generating curve (**C3**) of the intermediate surface (**16**) is not constant.

6. Container (**1**) according to any one of the preceding claims, in which the radius (**R3**) of curvature of the generating curve (**C3**) of the intermediate surface (**16**) is at least 10 mm.

7. Container (**1**) according to one of Claims 1 to 4, in which the radius (**R3**) of curvature of the generating curve (**C3**) of the intermediate surface (**16**) is 28 mm.

8. Container according to one of Claims 1 to 6, in which the radius (**R3**) of curvature of the generating curve (**C3**) of the intermediate surface (**16**) is infinite, the generating curve (**C3**) of the surface (**16**) being considered as a straight line.

9. Container (**1**) according to any one of the preceding claims, in which the ratio between the radius (**R3**) of curvature of the generating curve (**C3**) of the intermediate surface (**16**) and the radius (**R1, R2**) of curvature of each generating curve (**C1, C2**) of the connecting surfaces (**14**, **15**) is at least eight.
